## Europäisches Patentamt
## European Patent Office
## Office européen des brevets

(11) Publication number: **0 276 950**
**A2**

# EUROPEAN PATENT APPLICATION

(21) Application number: **88300480.6**

(22) Date of filing: **21.01.88**

(51) Int. Cl.⁴: **F 16 D 65/22**

(30) Priority: **24.01.87 GB 8701565**

(43) Date of publication of application:
**03.08.88 Bulletin 88/31**

(84) Designated Contracting States: **DE FR GB IT SE**

(71) Applicant: **LUCAS INDUSTRIES public limited company**
**Great King Street**
**Birmingham, B19 2XF West Midlands (GB)**

(72) Inventor: **Margetts, Hugh Grenville**
**26, Redwood**
**Ross-on-Wye Herefordshire (GB)**

(74) Representative: **Waite, Anthony William et al**
**MARKS & CLERK Alpha Tower Suffolk Street Queensway**
**Birmingham B1 1TT (GB)**

(54) **Brake Actuator.**

(57) A brake actuator has a force input device (8) which includes a shaft (20) mounted for rotation about its longitudinal axis and a cam device (22) rotatably mounted on the shaft about an eccentric axis. The cam device (22) actuates force transmission elements (14) engageable, in use, with respective brake friction members (1, 2). The members (9) engage the cam device (22) at different distances from the eccentric cam axis, thereby creating an effective lever device which acts to apply brake actuating force from the input device (8) to said elements in a predetermined ratio.

FIG 2.

EP 0 276 950 A2

**Description**

## BRAKE ACTUATOR.

This invention relates to a brake actuator primarily for use with an internal shoe drum brake, and of the general kind having a force input device from which brake actuating force is transmitted by opposed force transmission elements to friction members engagable with a rotary member to be braked.

One conventional type of leading/trailing shoe drum brake, widely used on heavy commercial vehicles for example, is commonly actuated by an 'S' cam or 'Z' cam mechanism, which, as will be understood by those familiar with the art, operates in such a manner as to cause the brake shoes to wear at substantially equal rates. In doing this, the actuator applies approximately three times more force to the trailing shoe than it does to the leading shoe, giving rise to well-understood brake balance problems as a result of differential deflections in the brake components associated respectively with the leading and trailing shoes. The control of these problems requires very careful setting up of the brakes in the factory during assembly of a vehicle but this adds to manufacturing costs and is not always entirely reliable in practice.

An object of the invention is to provide a brake actuator, especially but not exclusively for use in a leading/trailing shoe drum brake, which is conducive to balanced braking and minimises or avoids the problems referred to above.

According to the invention, a brake actuator comprises a force input device, opposed force transmission elements for engagement, in use, with respective friction members engagable with a rotary member to be braked, and a lever device arranged between the force input device and said elements in such a manner that, upon actuation of the force input device, brake actuating force is applied from the force input device to said force transmission elements in a predetermined ratio.

Such an arrangement enables force to be applied to one of the friction members with a proportionately higher mechanical advantage than that applied to the other member, which remains substantially constant irrespective of brake component deflections. In the case of a leading/trailing shoe drum brake, the distribution of force between the shoes would ideally be in the ratio of 3:1 in favour of the trailing shoe.

In one convenient arrangement, the force input device is drivingly connected to an eccentrically mounted rotary cam device which acts on the force transmission elements by way of struts, the latter being positioned in relation to the cam in such a manner that the cam provides lever arms of different lengths through which actuating force is transmitted to said struts.

Preferably, the force input device is a shaft mounted for rotation about its longitudinal axis with the cam device mounted rotatably on the shaft about an eccentric axis.

Alternatively, the force input device is of the linearly movable type, such as a wedge, said input device actuating a pivotable lever device which is connected to the force transmission elements, conveniently by way of struts co-acting with the lever device at different distances from the force input device.

The invention will now be described, by way of example, with reference to the accompanying drawings in which:-

Figure 1 is an end view of an internal shoe drum brake incorporating one form the actuator of the invention;

Figure 2 is an enlarged longitudinal cross-section of the actuator of the brake in Figure 1;

Figure 3 is a transverse cross-section of part of the actuator of Figure 2;

Figure 4 is a theoretical diagram illustrating certain characteristics of part of the actuator of Figure 2;

Figure 5 is a longitudinal cross-section of an alternative form of the actuator of the invention, and

Figure 6 is a cross-section along the line A-A of Figure 5.

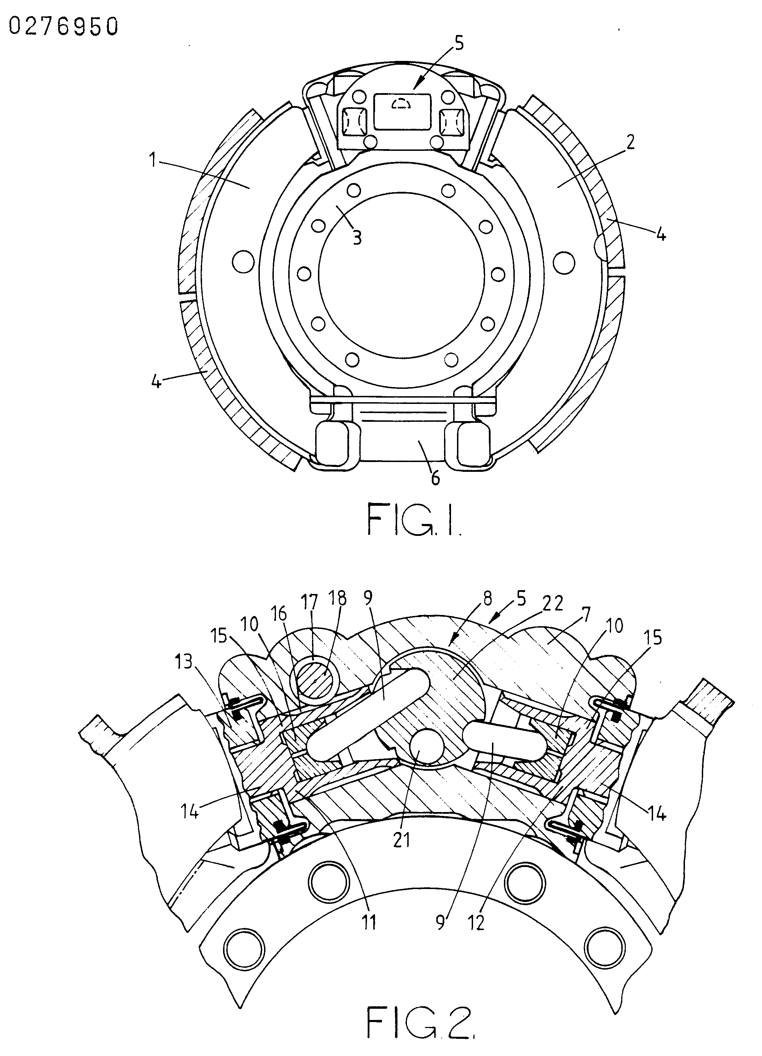

The internal shoe drum brake illustrated in Figure 1 has a pair of arcuate brake shoes 1, 2 mounted on a back plate 3, each shoe having a friction lining 4 for braking engagement with a rotatable drum (not shown). The brake is of the leading/trailing type, having a cam actuator 5 mounted on the back plate 3 between one pair of adjacent shoe ends and an abutment device 6 also mounted on the back plate and disposed between the other pair adjacent shoe ends, in conventional manner.

Figure 2 illustrates the actuator 5 in more detail. The actuator comprises a housing 7 adapted to be fixed in conventional manner to the back plate 3 and within which is mounted a rotary cam device 8 which co-operates, via struts 9 and hardened inserts 10, with respective tappets indicated generally at 11, 12, the inserts being press-fitted within the tappets. Each tappet 11, 12 incorporates an automatic adjuster mechanism, each of which includes an internally threaded nut 13 through which extends an externally threaded spigot 14 projecting from a head portion 15 of the tappet, the nut and spigot together constituting a strut of variable length operable to alter the retracted position of the adjacent brake shoe in response to wear of the shoe friction lining 4. The adjacent shoe contacts the nut 13 and thereby prevents rotation of the nut which, however, may move axially along the spigot 14 when the latter rotates. The external surface of the head 15 is formed with helical gear teeth 16 which mesh with similar teeth 17 on an end portion of an adjuster member in the form of a spigot 18 mounted in the housing for rotation, under the control of a clutch mechanism (not shown), about an axis at right angles to that of the tappet 11. The construction and operation of the adjuster will be well understood by those skilled in the art and will not be described further.

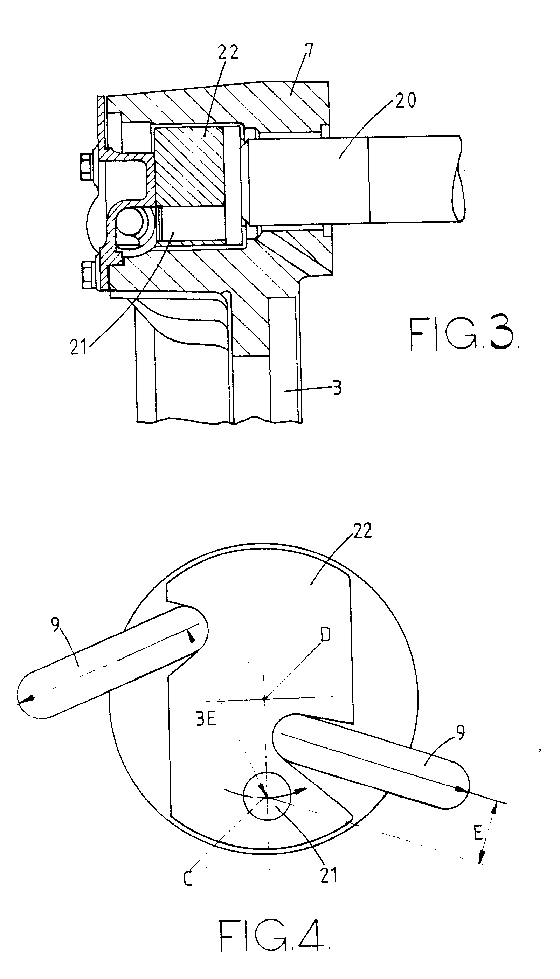

With further reference to Figures 2 and 3, the actuator includes a force input device in the form of a shaft 20 mounted in the housing 7 for rotation about its own longitudinal axis. The shaft has a longitudinally projecting eccentric spigot 21 on which is rotatably mounted a cam element 22 which is engaged by the struts 9 at different distances from the rotational centre C of the cam 22.

In the diagram of Figure 4 the struts 9 are illustrated in engagement with the cam 22 which is pivoted on the eccentric spigot 21 of the shaft 20. The rotational axis of the shaft 20 is designated 'D' and the eccentric rotational axis of the cam 'C'. It is desired to apply more actuating force to the trailing shoe than to the leading shoe, for the reasons discussed, the ideal ratio being 3:1. This is achieved in the present embodiment by engaging the link 9 associated with the trailing shoe at a location on the cam 22 which is at a distance E from the cam rotational centre C, and by engaging the leading shoe link 9 with the cam at a distance 3E from the centre C. Since the actuating load on the shoes will then be in inverse proportion to the distances of the strut centre lines from the centre C, it will be seen that actuation of the cam by rotating the shaft 20 will apply forces to the trailing and leading shoes respectively in the ratio 3:1, thereby ensuring that substantially balanced braking forces are applied by the shoes to the drum upon engagement therewith.

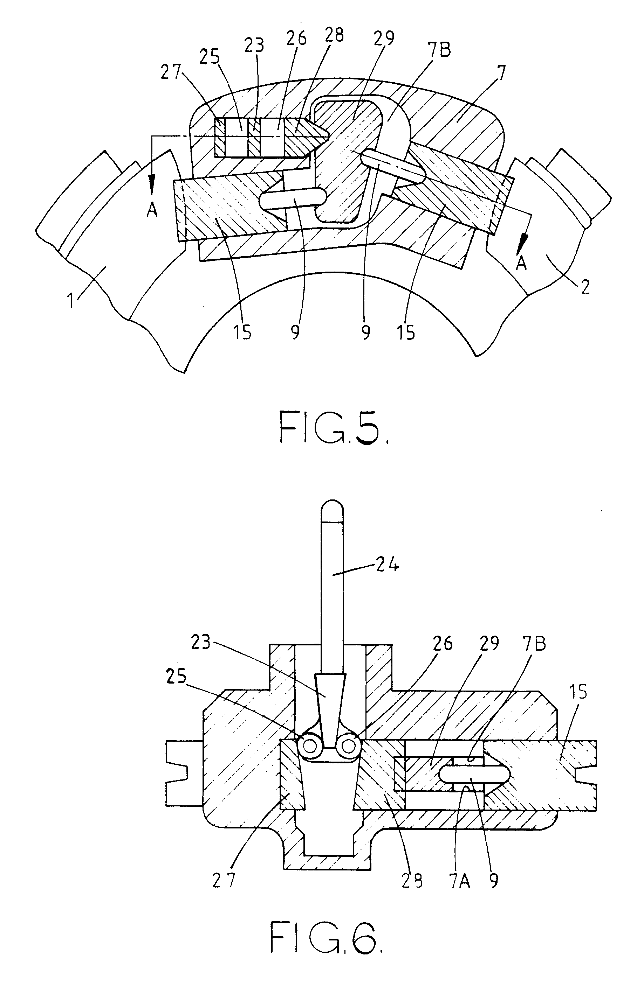

In the alternative embodiment illustrated in Figures 5 and 6, the rotary force input shaft is replaced by a wedge expander mechanism having a wedge 23 carried by a force input rod 24 and operating between a pair of rollers 25, 26 to expand the latter outwardly upon inward movement of the wedge actuated by the rod 24. The roller 25 bears against a fixed hardened insert 27 of the housing, whilst the roller 26 acts upon a slidably mounted actuator member 28 which is engaged with a rockable lever member 29 constrained between opposed lateral surfaces 7A, 7B of the housing. A pair of tappets 15 are slidable in the housing 7 and engaged respectively with brake shoes 1, 2. The lever member actuates the tappets 15 by way of links 9 which engage the lever member at locations which are at different distances from the point of engagement of the tappet 28 with the lever member, the lever being carried by the links 9 and actuator member 28. Said distances are arranged so that, upon actuation of the wedge, different forces are applied to the leading and trailing shoes, preferably again in the ratio of 3:1 in favour of the trailing shoe.

**Claims**

1. A brake actuator comprising a housing (7), a force input device (20), opposed force transmission elements (14) for engagement, in use, with respective friction members (1, 2) engageable with a rotary member to be braked, characterised by a lever device (21, 22, 9) arranged between the force input device (20) and the elements (14) in such a manner that, upon actuation of the force input device, brake actuating force is applied from the force input device (20) to said force transmission elements (14) in a predetermined ratio.

2. A brake actuator according to Claim 1 characterised in that the force input device (20) is drivingly connected to an eccentrically mounted rotary cam device (22) which acts on the force transmission elements (14) by way of struts (9), the latter being positioned in relation to the cam in such a manner that the cam provides lever arms of different lengths through which actuating force is transmitted to said struts.

3. A brake actuator according to Claim 2 characterised in that the force input device is a shaft (20) mounted for rotation about its longitudinal axis (D) with the cam device (22) mounted rotatably on the shaft about an eccentric axis (C).

4. A brake actuator according to any one of the preceding claims characterised in that each of said force transmission elements (14) comprises a pair of threadedly interengaged parts (13, 14) forming a strut of variable length, and automatic adjustment means (18) is associated with each strut.

5. A brake actuator according to Claim 1 characterised in that the force input device (23) is linearly movable.

6. A brake actuator according to Claim 5 characterised in that the force input device (23) is a wedge.

7. A brake actuator according to Claim 5 or Claim 6 characterised in that the force input device (23) actuates a pivotable lever device (29) connected to the force transmission elements (15) at different distances from said force input device (23).

8. A brake actuator according to Claim 7 characterised in that the force input device (23) is connected to the force transmission elements (15) by way of respective struts (9).

9. A brake actuator according to any one of Claims 5 to 8 characterised in that the force input device (23) acts on said lever device (29) by way of a linearly movable actuator member (28).

10. A brake actuator according to any one of Claims 5 to 7 characterised in that the force input device (23) is connected to the force transmission elements (15) by way of respective struts (9), the force input device (23) acting on said lever device (29) by way of a linearly movable actuator member, the lever device being guided laterally by the actuator housing (7) and being carried by said actuator member (28) and struts (9).

11. An internal shoe drum brake incorporating an actuator according to any one of Claims 1 to 10.

FIG.1.

FIG.2.

0276950

FIG.3.

FIG.4.

0276950

FIG.5.

FIG.6.